# EUROPÄISCHE PATENTANMELDUNG

(11) **EP 0 632 119 A1**
(43) Veröffentlichungstag der Anmeldung: **04.01.1995**
(21) Anmeldenummer: 94109936.8
(22) Anmeldetag: 28.06.1994
(51) Int. Cl.: C10B 53/00

(54) **Verfahren und Vorrichtung zum Aufarbeiten von Werkstoffen aus oder mit Anteilen aus Kunststoff, Gummi oder Lack**

(30) Priorität: 29.06.1993 DE 4321641; 27.05.1994 DE 4418562
(71) Anmelder: Leybold Durferrit GmbH, D-50968 Köln (DE)
(72) Erfinder: Hugo, Franz, D-63743 Aschaffenburg (DE); Teuschel, Helmut, D-63069 Offenbach (DE); Wanetzky, Erwin, Dipl.-Ing., D-63538 Grosskrotzenburg (DE)

(57) **Zusammenfassung**

Beim Aufarbeiten von aus organischen Stoffen bestehendem oder mit diesen Stoffen versehenem Gut heizt man das Gut in einer Vakuumprozeßkammer (1) bei unteratmosphärischem Druck in einer nicht-reaktiven Atmosphäre auf eine Temperatur von mindestens 200 °C auf, kondensiert die dabei gebildeten Gase und Dämpfe in einem Kondensatabscheider (3), fängt das Kondensat auf und führt es einer Wiederverwertung oder Entsorgung zu. Bei den organischen Stoffen handelt es sich um Gummi, Kunststoffe und Lacke. Die aus diesen Stoffen gebildeten versprödeten Rückstände werden zerkleinert und die zerkleinerten Rückstände aufgefangen und einer Wiederverwertung oder Entsorgung zugeführt. Bei in dem Gut enthaltenen Metallen werden die Rückstände abgelöst, gesammelt, gegebenenfalls zerkleinert. Vorzugsweise dienen das Verfahren und die Vorrichtung zum Aufarbeiten von
a) elektrischen Leitungen,
b) durch Gummi verbundenen metallischen Massivteilen,
c) Kunststoffbehältern mit Farbpigmenten,
d) Kraftfahrzeug-Lenkrädern,
e) mit Lack überzogenen Werkstückträgern und Werkzeugen,
f) fehllackierten Metallteilen,
g) Autoreifen und Gummipolstern von Kettenfahrzeugen und
h) Dichtungselementen.

## Beschreibung

Die Erfindung betrifft ein Verfahren zum Aufarbeiten von aus organischen Stoffen in Form von Gummi, Kunststoff und/oder Lacken bestehendem oder mit organischen Stoffen in Form von Gummi, Kunststoffen und Lacken versehenem Gut bei erhöhter Temperatur.

Im privaten wie im industriellen Bereich fallen massenhaft Abfälle aus Gummi, Kunststoffen und Lacken oder mit diesen Stoffen versehene Bauteile an, die ganz oder teilweise als Wertstoffe zu bezeichnen sind und aufgearbeitet werden sollen. Die Aufarbeitung wird aus ökologischen Gründen zunehmend wichtiger. Die bisher bekannten Verfahren sind die Verbrennung und die Verschwelung. Beide Verfahren sind nicht problemlos, da zum Teil Chlor- und Schwefelverbindungen freigesetzt werden. Zum Teil enthalten die Gummiabfälle Metalleinlagen mit korrosionsschützenden (z.B. Zn) Auflagen, die oxidiert und als Flugstaub freigesetzt werden. Bei den Verbrennungsvorgängen werden sehr große Luftmengen durchgesetzt, die in großen Gas- und Staubfiltern gereinigt werden müssen.

Es ist bekannt, überflüssige Altreifen, d.h. solche, die nicht mehr runderneuert werden können, in Zementfabriken als Heizmaterial einzusetzen. Hierbei gehen jedoch fast alle Wertstoffe verloren.

Es ist durch den Aufsatz von Theerkorn u.a. "Sauberer Wirbel", veröffentlicht in "Maschinenmarkt", Würzburg 98 (1992), Seiten 30 bis 35, weiterhin bekannt, Metallteile im reduktiven Fluidbett-Verfahren in Aluminiumoxidpulver in Gegenwart von Stickstoff und Wasserstoff bei Temperaturen zwischen 350 und 1000 °C, vorzugsweise aber oberhalb von 450 °C, zu reinigen. Hierbei werden jedoch außer den Metallteilen durch Cracken nur gasförmige Stoffe erhalten, die gereinigt und verbrannt werden. Es wird sogar vorgeschlagen, die Abgase durch ein zweites Fluidbett höherer Temperatur zu leiten, um dem Imissionsschutzgesetz zu genügen. Für die Vermeidung von Dioxinen und Furanen werden sogar Temperaturen von 950 °C angegeben. Mitgerissene Aluminiumoxidpulverteilchen müssen in einem Zyklonabscheider aufgefangen werden. Eine Entfettung erfolgt bei Temperaturen zwischen 350 und 460 °C, bei starker Verunreinigung zwischen 450 und 550 °C und Prozeßdauern bis zu 60 Minuten. Eine derartige Temperaturbelastung halten viele Werkstücke, insbesondere solche aus Aluminiumlegierungen nicht aus. Dünnwandige Werkstücke neigen zum Verziehen.

Es ist weiterhin bekannt, die Entfettung und Entlackung von Bauteilen in einem reaktiven Niederdruckplasma durchzuführen, das durch Mikrowellen angeregt wird. Die Vorrichtung ist jedoch aufwendig, und das Verfahren stellt eine hohe Temperaturbelastung für die Bauteile dar.

Es ist weiterhin bekannt, Metallteile von Elastomeren und anderen Kunststoffen durch Kryogen-Technik zu entschichten, indem man die Gegenstände in flüssigem Stickstoff auf -196 °C abkühlt und hierbei die Kunststoffe versprödet. Die abgefallenen oder abgeschlagenen Kunststoffe müssen jedoch in weiteren Prozessen aufgearbeitet werden.

An Recyclingverfahren für zahlreiche anfallenden Wertstoffe ist bislang nicht gedacht worden. So werden beispielsweise Kardangelenke an Kraftfahrzeugen mit gummi-elastischen Bälgen vor Schmutz und Staub geschützt. Diese Bälge haben im Betrieb eine Doppelfunktion zu erfüllen. Sie stellen erstens ein mit Schmierfett versehenes Reservoir für das Gelenk dar und verhindern zweitens das Eindringen von Wasser und aggressivem Schmutz

Nach einer begrenzten Betriebsdauer durch Alterung oder auch durch Beschädigung müssen diese Bälge erneuert werden. Dies geschieht praktisch immer beim Austausch des Kardangelenks. Die verschlissenen Bälge werden als Problemmüll bezeichnet. Diese Bälge fallen gleichfalls bei der Autoverwertung mit anderen Bauteilen wie zum Beispiel Simmerringen, Hutmanschetten, O-Ringen oder weiteren Dichtungen an.

Eine Wiederaufbereitung oder auch nur eine Entsorgung wäre möglich, wenn der Kunststoff oder Gummi von den Schmiermitteln getrennt wird. Diese Trennung ist bislang meist durch Waschvorgänge ermöglicht worden. Ein weiteres Verfahren zur Entfettung und Entölung von Kunststoff oder Gummi enthaltenden Bauteilen ist das thermische Verdampfen der Fette im Vakuum. Hierzu ist im Stand der Technik bereits ein Verfahren bekannt (DE P 41 36 990.4). Diese Schrift beschreibt ein Verfahren zur Entfettung und Reinigung von mit fett- und/oder ölhaltigen Stoffen behaftetem Gut und zeichnet sich dadurch aus, daß das zu reinigende Gut unter Vakuumbedingungen in einer Prozeßkammer derart erwärmt wird, daß die Fette und/oder Öle in Abhängigkeit von ihrem Aggregatzustand vom Gut abtrennbar sind.

Für die Weiterverwertung der so entfetteten Gummiteile müssen diese kleingeschnitten und gemahlen werden. Der Mahlvorgang ist weitaus schwieriger als die Entfettung, kann aber durch Unterkühlung, zum Beispiel mit flüssigem Stickstoff durchgeführt werden.

Diese bekannten Verfahren und Vorrichtungen haben den Nachteil, daß zum Beispiel auch nach der Verbrennung noch große Mengen an festen und gasförmigen Abfallstoffen vorhanden sind, die entweder separat entsorgi oder zum Teil auch durch Verbrennung an die Atmosphäre abgegeben werden. Die Abgase aus der Verbrennung enthalten große Mengen Metalloxide (z.B. Zink-, Cadmium-, Vanadium-, Arsen-Oxid u.a.), die zum Teil sehr giftig sind.

Aufgabe der vorliegenden Erfindung ist es nun, ein Verfahren und eine Vorrichtung anzugeben, durch die die bei der Aufarbeitung von Gut aus oder mit Gummi, Kunststoffen oder Lacken entstehende Gasmenge minimiert wird und sowohl die Gase als auch die gegebenenfalls im Gut vorhandenen metallischen Feststoffe auf einfache Weise einer ökologisch und ökonomisch vertretbaren Weiterverarbeitung oder Entsorgung zugeführt werden können.

Diese Aufgabe wird bei dem eingangs angegebenen Verfahren erfindungsgemäß dadurch Gelöst, daß man das Gut bei unteratmosphärischem Druck in einer nicht-reaktiven Atmosphäre auf eine Temperatur von mindestens 200 °C aufheizt, die dabei gebildeten Gase und Dämpfe kondensiert und das Kondensat auffängt und einer Wiederverwertung oder Entsorgung zuführt, die aus den organischen Stoffen gebildeten versprödeten Rückstände zerkleinert und die zerkleinerten Rückstände auffängt und einer Wiederverwertung oder Entsorgung zuführt.

Es ist dabei im Zuge weiterer Ausgestaltungen der Erfindung besonders vorteilhaft, wenn man
a) bei in dem Gut enthaltenen metallischen Komponenten die aus den organischen Stoffen gebildeten Rückstände von den metallischen Komponenten ablöst, sammelt, gegebenenfalls zerkleinert und gleichfalls einer Wiederverwertung oder Entsorgung zuführt,
und/oder, wenn man
b) beim Vorhandensein verdampfbarer metallischer Komponenten diese verdampft, gleichfallskondensiert und einer Wiederverwertung oder Entsorgung zuführt, insbesondere dann, wenn man zur Verzögerung der Verdampfung der verdampfbaren metallischen Komponenten den Druck anfänglich unterhalb des Atmosphärendrucks, jedoch oberhalb des späteren Behandlungsdrucks, einstellt,
und/oder, wenn man
c) verfettetes und/oder veröltes Gut in einem Vorreinigungsschritt durch Erwärmen bei unteratmosphärischem Druck entfettet und/oder entölt und die Fette und/oder Öle auffängt und einer Wiederverwertung oder Entsorgung zuführt, insbesondere dann, wenn man die Vorreinigung bei einer niedrigeren Temperatur als die der Aufarbeitung durchführt,
und/oder, wenn man
d) die Aufarbeitung bei einem Druck von maximal 40 mbar, vorzugsweise von maximal 10 mbar, durchführt
und/oder, wenn man
e) beim Aufarbeiten von Gut mit metallischen Komponenten die von den Rückständen befreiten metallischen Komponenten einer Wiederverwertung zuführt,
und/oder, wenn man
f) beim Aufheizen des Gutes den Druck anfänglich unter den Atmosphärendruck, jedoch über den späteren Behandlungsdruck, einstellt und die Kondensationswärme der zuerst verdampften Komponenten zum Aufheizen kälterer Zonen innerhalb der gleichen Chargen verwendet.

Das erfindungsgemäße Verfahren eignet sich insbesondere für die Aufarbeitung von folgendem Gut, wobei Gummi, Kunststoffe und Lacke verspröden und abfallen oder abgeklopft werden und die bei der Versprödung flüchtigen Komponenten überdestillieren:
- elektrischen Leitungen mit einer Ummantelung aus Kunststoff und/oder Gummi, wobei das Leitungsmaterial (z.B. Kupfer) zurückbleibt,
- durch Gummi verbundenen metallischen Massivteilen, insbesondere Schwingmetallen, wobei die Massivteile (z.B. Stahl) zurückbleiben,
- Kunststoffbehältern mit Farbpigmenten, insbesondere aus der Gruppe Joghurt-Becher, Ölflaschen und Tüten, wobei die Pigmente zurückbleiben,
- Kraftfahrzeug-Lenkrädern mit einem Metallkern und einem Überzug aus organischem Material, wobei der Metallkern zurückbleibt,
- Airbag-Deckeln aus einem Metallkunststoffverbund, wobei das Metall zurückbleibt,
- mit Lack überzogenen Werkstückträgern aus einer Lackierstraße, wobei die Werkstückträger zurückbleiben,
- fehllackierten Metallteilen und kunststoffbeschichteten Werkstückträgern für galvanische Bäder, die zurückbleiben,
- Autoreifen mit Drahteinlagen, die einen Überzug aus Cadmium und/oder Zink aufweisen, wobei die Drahteinlagen zurückbleiben und leichtsiedende Metalle (z.B. Schutzüberzüge der Drahteinlagen) kondensiert werden,
- Gummipolstern von Ketten von Gleiskettenfahrzeugen, wobei der metallische Träger der Polster zurückbleibt,
- mit Kunststoff beschichteten Werkzeugen, insbesondere Extrusionswerkzeugen, wobei die Werkzeuge wiedergewonnen werden,
- Dichtungselementen, insbesondere Faltenbälgen, Dichtungsringen, Simmerringen, O-Ringen und Hutmanschetten.

Abdestillierte Schmierstoffe können anschließend wieder aufbereitet und einer neuen Verwendung zugeführt werden. Verbleiben die so gereinigten Bauteile nach der Entfettung in der Vakuumprozeßkammer und wird die Prozeßtemperatur weiter gesteigert, so verlieren diese ursprünglich flexiblen Kunststoff- oder Gummiteile ihre Elastizität. Die organischen Verbindungen werden zerstört und es bleibt bei Gummi ein Kohlenstoffgerüst übrig. Die leicht verdamptbaren Metalle (z.B. Zn, Cd) werden im Kondensator metallisch abgeschieden. Das metallische Kondensat setzt sich, aufgrund der höheren Dichte gegenüber den Ölen, am Boden des Kondensators ab. Dieses Kohlenstoffgerüst - frei von verdampfbaren Metallen - kann anschließend problemlos zerkleinert oder zu Pulver gemahlen werden. Die bei dem Versprödungsprozeß anfallenden S-, Cl-, F- und N-Verbindungen können nach bekannten Verfahren neutralisiert und niedergeschlagen werden.

Gegenüber der herkömmlichen Verbrennung sind bei dem erfindungsgemäßen Verfahren vorteilhafterweise nur wesentlich geringere Abgasmengen zu behandeln. Gleichzeitig ist dieser Prozeß als geschlossener Prozeß durchführbar, so daß keine Gase unbeabsichtigt in die Umgebungsluft gelangen können. Im Gegenteil, die in dem Gasbehälter gesammelten Gase können durch einen Gasanalysator bestimmt werden und einer gezielten Weiterbenutzung oder Entsorgung zugeführt werden. So ist es möglich, die Druckseite der Vakuumpumpe mit einem Brenner oder einer katalytischen Vorrichtung zu verbinden.

Verwertbare Gase können in transportfähige Flaschen abgefüllt werden.

Die versprödeten Gummiteile können, zum Beispiel zu Pulver gemahlen, überall dort eingesetzt werden, wo Kohlenstaub oder -mehl verwendet und zu Kohle- oder Graphit-Halbzeugen, evtl. wieder zu Gummiartikeln verarbeitet werden. Alle nichtmetallischen Destillationsprodukte können zu neuen Schmiermitteln verarbeitet werden.

In einem Ausführungsbeispiel wurden verölte Gummiteile in einer VakuumEntfettungsanlage zunächst bis auf 200 °C erwärmt und anschließend auf 300 °C aufgeheizt, um diese zu verspröden. Die Prozeßdauer bei Erwärmung von 20 °C Raumtemperatur auf 300 °C und anschließendem Halten bei 300 °C betrug ca. 3 Stunden. Danach wurde die Anlage abgeschaltet und mit natürlicher Geschwindigkeit abgekühlt. Nach diesem Verfahren und mit dieser Vorrichtung können zum Beispiel Kunststoff- und Gummiartikel jeglicher Art versprödet werden.

Die Erfindung betrifft auch eine Vorrichtung zur Durchführung des Verfahrens. Sie ist zur Lösung der gleichen Aufgabe gekennzeichnet durch eine beheizbare Vakuumprozeßkammer, der durch Rohrleitungen mit Ventilen mindestens ein Kondensat-Abscheider und eine Vakuumpumpe nachgeschaltet sind.

Diese Vorrichtung kann im Zuge weiterer Ausgestaltungen der Erfindung durch folgende Merkmale gekennzeichnet sein:
- der Vakuumpumpe ist ein Gasneutralisator nachgeschaltet,
- in einem Rohrleitungssystem ist ein Gastrockner angeordnet,
- im Rohrleitungssystem ist ein Gassammelbehälter angeordnet,
- die Vakuumprozeßkammer ist als Durchlaufanlage mit mindestens einem Schleusenventil ausgebildet,
- der Vakuumprozeßkammer ist eine Abkühlkammer nachgeschaltet,
- zwischen der Vakuumprozeßkammer und der Abkühlkammer ist eine Schleuse angeordnet,
- in einer der Vakuumprozeßkammer nachgeschalteten Rohrleitung ist ein Regelventil angeordnet,
- der Kondensatabscheider ist als Öldampf-Kondensator ausgebildet,
- der Kondensatabscheider ist als Metalldampf-Kondensator ausgebildet,
- zwischen der Vakuumpumpe und einer der Vakuumpumpe nachgeschalteten Ableitung ist eine durch Ventile regelbare Ringleitung angeordnet, in der sich der Gasneutralisator und/oder der Gastrockner befindet bzw. befinden,
- dem Gassammelbehälter ist eine Abfüllvorrichtung für das Befüllen von Transportflaschen nachgeschaltet,
- der Vakuumpumpe ist ein Brenner für die Verbrennung der Abgase nachgeschaltet, und/oder
- der Vakuumpumpe ist eine katalytische Vorrichtung, insbesondere mit einem Niedertemperatur-Katalysator nachgeschaltet.

Weitere Ausführungsmöglichkeiten und Merkmale sind in den Unteransprüchen näher beschrieben und gekennzeichnet.

Die Erfindung läßt die verschiedensten Ausführungsmöglichkeiten zu; eine davon ist in den anhängenden Zeichnungen näher dargestellt und zwar zeigen:

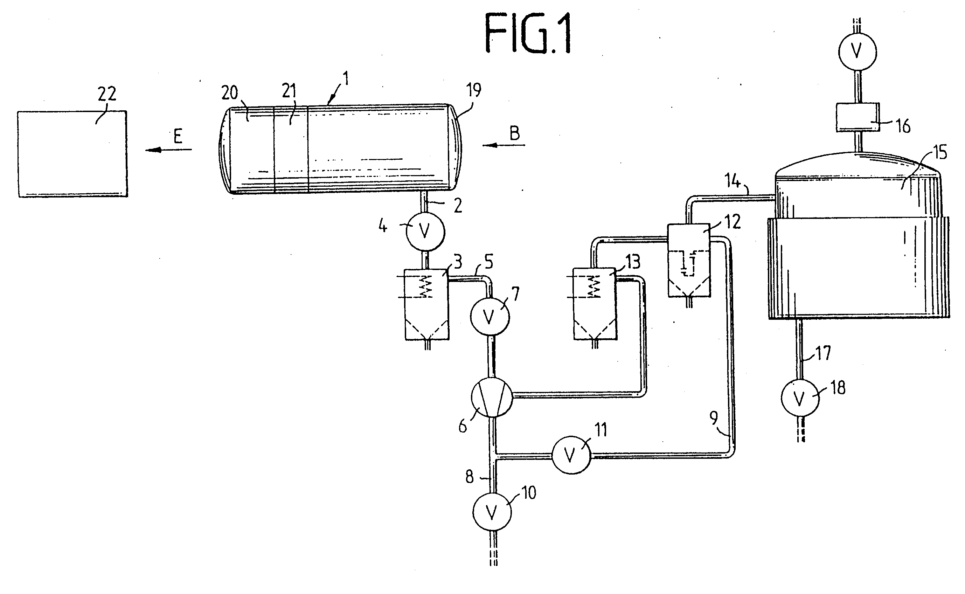

- Figur 1: eine schematische Darstellung der Prozeßkomponenten für ein Gummi-Versprödungsverfahren,
- Figur 2: den Druckverlauf während eines Versprödungsverfahrens,
- Figur 3: den Temperaturverlauf während eines Versprödungsverfahrens und
- Figur 4: den Druckverlauf während eines Versprödungsverfahrens mit gleichzeitiger Metalldampf-Kondensation.

Eine elektrisch beheizte oder gas-/ölbefeuerte Prozeßkammer 1 ist über eine Leitung 2 mit einem Kondensatabscheider 3 verbunden. In der Leitung 2 ist ein Absperrventil 4 vorgesehen. Der Abscheider 3 wiederum ist über eine Saugleitung 5 mit einer Vakuumpumpe 6 in Verbindung, wobei in der Saugleitung 5 ein Ventil 7 angeordnet ist. Die elektrische Beheizung der Prozeßkammer und/oder des Gutes kann kapazitiv, induktiv, durch Mikrowelle mit direkter oder indirekter Ankopplung oder durch Heizwiderstände erfolgen.

Auf der Ausgangsseite der Vakuumpumpe 6 befinden sich eine Ableitung 8 und eine Ringleitung 9, die beide durch die Ventile 10 und 11 regelbar sind. In der Ringleitung 9 sind weiterhin ein Gasneutralisator 12 sowie ein Gastrockner 13 vorgesehen. Am Neutralisator 12 ist weiterhin eine Leitung 14 angeordnet, die den Neutralisator 12 mit einem Gasbehälter 15 verbindet.

Am Gasbehälter 15 befinden sich ein Gasanalysator 16 sowie eine Ableitung 17, die mittels des Ventils 18 verschließbar ist und beispielsweise zum Verfüllen des Gases in Transportflaschen einsetzbar ist.

Die Prozeßkammer 1 ist als Schleusenkammer ausgeführt, so daß das zu behandelnde Gut durch eine Beladetür 19 auf der einen Kammerseite in die Kammer 1 eingebracht wird und nach Ende des Behandlungsverfahrens auf der gegenüberliegenden Kammerseite durch eine Entladetür 20 aus der Kammer 1 herausbringbar ist. Die Entladetür 20 ist von dem Behandlungsraum der Kammer 1 durch eine Schleuse 21 abtrennbar. Alternativ kann die Vakuumprozeßkammer 1 auch chargenweise betrieben werden, wenn sie nur eine Beladetür 19 aufweist.

An die Prozeßkammer 1 schließt sich in Entladerichtung E ein Silo oder eine Abkühleinrichtung 22 als Zwischenlager für eine nicht dargestellte Mahlvorrichtung an, in der das versprödete Gut anschließend mechanisch zerkleinert und gegebenenfalls verdichtet wird.

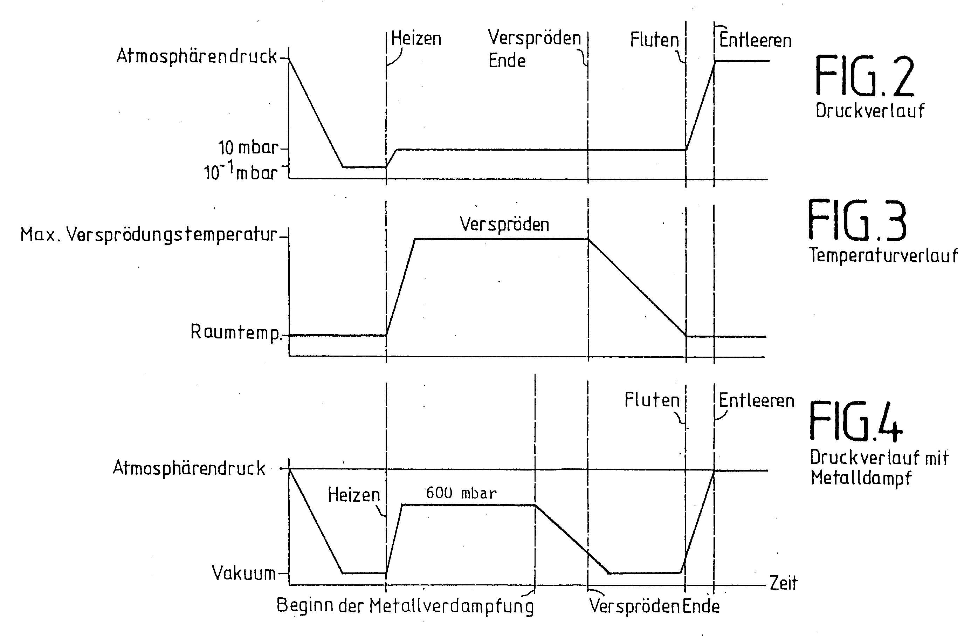

Die nachfolgenden Figuren 2, 3 und 4 zeigen beispielhaft den Druck- bzw. Temperaturverlauf als Funktion der Zeit innerhalb der Prozeßkammer 1 während eines Versprödungsverfahrens.

Nach dem Einbringen des anfangs flexiblen, weichen Guts in die Kammer wird zunächst vom Atmosphärendruck ausgehend (Figur 2) ein Vakuum mit beispielsweise 10⁻¹ mbar eingestellt und für kurze Zeit konstant gehalten. Nun beginnt der Heizvorgang, so daß sich der Kammerdruck geringfügig erhöht, auf beispielsweise 10 mbar. Dieser Druck bleibt nahezu konstant - vorausgesetzt die Prozeßkammer wird kontinuierlich evakuiert - über das Ende des Versprödungsverfahrens hinaus bis zum Beginn des Flutens der Kammer. Danach steigt der Kammerdruck wieder bis auf Atmosphärendruck und die Kammer kann geöffnet und entleert werden.

Der Temperaturverlauf (Figur 3) bleibt bis zum, Beginn des Heizvorgangs konstant auf Raumtemperatur. Nun wird zügig auf Versprödungstemperatur aufgeheizt; diese beginnt üblicherweise bei 250 °C für zu behandelnde Werkstücke aus Gummi und reicht bis über 400 °C. Bestehen dagegen die zu versprödenden Werkstücke nicht ausschließlich aus Gummi, Kunststoff o.ä., sondern sind in den Werkstücken noch metallische Einlagen vorhanden, die einen Überzug aus leicht verdampfbaren Metallen wie Cadmium und/oder Zink besitzen, wie beispielsweise bei Stahlgürtelreifen, so muß die Prozeßtemperatur oberhalb der Verdampfungstemperatur des betreffenden Metalls liegen. Dieses beträgt beispielsweise für Cadmium mindestens 320 °C und für Zink mindestens 400 °C, jeweils bei einem Vakuum kleiner als 10⁻¹ mbar.

Nach Beendigung des Versprödungsvorgangs wird die Charge ausgeschleust oder die Kammertemperatur wieder bis auf Raumtemperatur abgekühlt, und bei dieser Temperatur wird die Kammer geflutet und entleert.

Im Vergleich zu dem in Figur 2 gezeigten Druckverlauf nimmt dieser einen anderen Verlauf an (Figur 4), wenn während des Versprödens auch noch Metall aus dem Gut verdampft wird, wie bereits beim Temperaturverlauf in Figur 3 erwähnt. Hierbei verändert sich der Druck (während des eigentlichen Versprödens) dadurch, daß die Prozeßkammer mir Heizbeginn verschlossen und nicht weiter abgepumpt wird. Somit steigt der Kammerdruck auf einen Wert, der unterhalb des Atmosphärendrucks, aber oberhalb des eigentlichen Behandlungsdrucks, beispielsweise bei etwa 600 mbar, liegen kann. Mit Beginn der Metallverdampfung wird die Saugleitung zur, Kammer wieder geöffnet, die Kammer verstärkt evakuiert und der Druck bis über das Ende des Versprödens hinaus auf seinen Minimalwert gesenkt. Nachdem die Kammer komplett evakuiert ist, wird der Vakuumdruck noch über einen kurzen Zeitraum auf Minimalwert gehalten und anschließend wird die Kammer geflutet und entleert.

### BEZUGSZEICHENLISTE

- 1: Prozeßkammer
- 2: Kondensatleitung
- 3: Kondensatabscheider
- 4: Ventil
- 5: Saugleitung
- 6: Vakuumpumpe
- 7: Ventil
- 8: Ableitung
- 9: Ringleitung
- 10: Ventil
- 11: Ventil
- 12: Gas-Neutralisator
- 13: Gas-Trockner
- 14: Leitung
- 15: Gasbehälter
- 16: Gas-Analysator
- 17: Ableitung
- 18: Ventil
- 19: Beladetür
- 20: Entladetür
- 21: Schleuse
- 22: Silo
- B: Belade-Richtung
- E: Entlade-Richtung

## Patentansprüche

1. Verfahren zum Aufarbeiten von aus organischen Stoffen in Form von Gummi, Kunststoffen und/oder Lacken bestehendem oder mit organischen Stoffen in Form von Gummi, Kunststoffen und Lacken versehenem Gut bei erhöhter Temperatur, **dadurch gekennzeichnet,** daß man das Gut bei unteratmosphärischem Druck in einer nichtreaktiven Atmosphäre auf eine Temperatur von mindestens 200 °C aufheizt, die dabei gebildeten Gase und Dämpfe kondensiert und das Kondensat auffängt und einer Wiederverwertung oder Entsorgung zuführt, die aus den organischen Stoffen gebildeten versprödeten Rückstände zerkleinert und die zerkleinerten Rückstände auffängt und einer Wiederverwertung oder Entsorgung zuführt.

2. Verfahren nach Anspruch 1, **dadurch gekennzeichnet,** daß man bei in dem Gut enthaltenen metallischen Komponenten die aus den organischen Stoffen gebildeten Rückstände von den metallischen Komponenten ablöst, sammelt, gegebenenfalls zerkleinert und gleichfalls einer Wiederverwertung oder Entsorgung zuführt.

3. Verfahren nach Anspruch 2, **dadurch gekennzeichnet,** daß man beim Vorhandensein verdampfbarer metallischer Komponenten diese verdampft, gleichfalls kondensiert und einer Wiederverwertung oder Entsorgung zuführt.

4. Verfahren nach Anspruch 1, **dadurch gekennzeichnet,** daß man verfettetes und/oder veröltes Gut in einem Vorreinigungsschritt durch Erwärmen bei unteratmosphärischem Druck entfettet und/oder entölt und die Fette und/oder Öle auffängt und einer Wiederverwertung oder Entsorgung zuführt.

5. Verfahren nach Anspruch 4, **dadurch gekennzeichnet,** daß man die Vorreinigung bei einer niedrigeren Temperatur als die Aufarbeitung durchführt.

6. Verfahren nach Anspruch 1, **dadurch gekennzeichnet,** daß man die Aufarbeitung bei einem Druck von maximal 40 mbar, vorzugsweise von maximal 10 mbar, durchführt.

7. Verfahren nach Anspruch 3, **dadurch gekennzeichnet,** daß man zur Verzögerung der Verdampfung der verdampfbaren metallischen Komponenten beim Aufheizen des Gutes den Druck anfänglich unter den Atmosphärendruck, jedoch über den späteren Behandlungsdruck einstellt, und die Kondensationswärme der zuerst verdampften Komponenten zum Aufheizen kälterer Zonen innerhalb der gleichen Charge verwendet.

8. Verfahren nach Anspruch 1, **dadurch gekennzeichnet,** daß man beim Aufarbeiten von Gut, das vollständig aus Gummi, Kunststoffen und/oder Lacken besteht, die erhaltenen Rückstände einem Mahlverfahren zuführt.

9. Verfahren nach Anspruch 2, **dadurch gekennzeichnet,** daß man beim Aufarbeiten von Gut mit metallischen Komponenten die von den Rückständen befreiten metallischen Komponenten einer Wiederverwertung zuführt.

10. Verfahren nach den Ansprüchen 1 und 2, **dadurch gekennzeichnet,** daß man beim Aufarbeiten von elektrischen Leitungen mit einer Ummantelung aus Kunststoff und/oder Gummi die Leitungen einer Temperatur von mindestens 200 °C aussetzt, die aus der Ummantelung gebildeten Rückstände mechanisch entfernt und die metallische Komponente der Leitungen einem Wiederverwertungsprozeß zuführt.

11. Verfahren nach den Ansprüchen 1, 2 und 9, **dadurch gekennzeichnet,** daß man durch Gummi verbundene metallische Massivteile, insbesondere Schwingmetalle, entsprechend aufarbeitet und die Massivteile einer Wiederverwertung zuführt.

12. Verfahren nach Anspruch 1, **dadurch gekennzeichnet,** daß man Kunststoffbehälter mit Farbpigmenten einer Temperatur von mindestens 200 °C, vorzugsweise von mindestens 250 °C, aussetzt, die Kunststoffkomponente verdampft und kondensiert und die Farbpigmente sammelt.

13. Vorrichtung nach Anspruch 12**, dadurch gekennzeichnet,** daß man Kunststoffbehälter aus der Gruppe Joghurt-Becher, Ölflaschen und Tüten entsprechend aufarbeitet.

14. Verfahren nach den Ansprüchen 1 und 2, **dadurch gekennzeichnet,** daß man Kraftfahrzeug-Lenkräder mit einem Metallkern und einem Überzug aus organischem Material einer Temperatur von mindestens 250 °C aussetzt, die aus dem organischen Material gebildeten Rückstände von dem Metallkern entfernt und den Metallkern einer Wiederverwertung zuführt.

15. Verfahren nach den Ansprüchen 1 und 2, **dadurch gekennzeichnet,** daß man mit Lack überzogene Werkstückträger aus einer Lackierstraße einer Temperatur von mindestens 200 °C aussetzt und die aus dem Lack gebildeten Rückstände von dem Werkstückträger entfernt.

16. Verfahren nach den Ansprüchen 1 und 2, **dadurch gekennzeichnet,** daß man fehllackierte Metallteile einer Temperatur von mindestens 200 °C aussetzt und die aus dem Lack gebildeten Rückstände von den Metallteilen entfernt und die Metallteile einer Wiederverwertung zuführt.

17. Verfahren nach den Ansprüchen 1 bis 3, **dadurch gekennzeichnet,** daß man Autoreifen mit Drahteinlagen, die einen Überzug aus Cadmium und/oder Zink aufweisen, zunächst versprödet, danach die Chargentemperatur auf Werte erhöht, bei denen unter einem vorgegebenen Vakuum das Cadmium und/oder Zink verdampft, den versprödeten Gummirückstand entfernt und auffängt und die Dämpfe aus Cadmium und/oder Zink kondensiert und einer Wiederverwertung zuführt.

18. Verfahren nach Anspruch 1, **dadurch gekennzeichnet,** daß man Gummipolster von Ketten von Gleiskettenfahrzeugen entsprechend aufarbeitet.

19. Verfahren nach Anspruch 1, **dadurch gekennzeichnet,** daß man mit Kunststoff beschichtete Werkzeuge, insbesondere Extrusionswerkzeuge, entsprechend aufarbeitet.

20. Verfahren nach Anspruch 1, **dadurch gekennzeichnet,** daß man Dichtungselemente, insbesondere Faltenbälge, Dichtungsringe, Simmerringe, O-Ringe und Hutmanschetten entsprechend aufarbeitet.

21. Vorrichtung zur Durchführung des Verfahrens nach einem oder mehreren der Ansprüche 1 bis 20, **gekennzeichnet durch** eine beheizbare Vakuumprozeßkammer (1), der durch Rohrleitungen (2,5) mit Ventilen (4,7) mindestens ein Kondensatabscheider (3) und eine Vakuumpumpe (6) nachgeschaltet sind.

22. Vorrichtung nach Anspruch 21, **dadurch gekennzeichnet,** daß in einem Rohrleitungssystem (2, 5, 9, 14) ein Gastrockner (13) angeordnet ist.

23. Vorrichtung nach Anspruch 21, **dadurch gekennzeichnet,** daß im Rohrleitungssystem (2, 5, 9, 14) ein Gassammelbehälter (15) angeordnet ist.

24. Vorrichtung nach Anspruch 21, **dadurch gekennzeichnet,** daß die Vakuumprozeßkammer (1) als Durchlaufanlage mit mindestens einem Schleusenventil (21) ausgebildet ist.

25. Vorrichtung nach Anspruch 21, **dadurch gekennzeichnet,** daß der Vakuumprozeßkammer (1) eine Abkühlkammer (22) nachgeschaltet ist.

26. Vorrichtung nach Anspruch 25, **dadurch gekennzeichnet,** daß zwischen der Vakuumprozeßkammer (1) und der Abkühlkammer (22) eine Schleuse (21) angeordnet ist.

27. Vorrichtung nach Anspruch 21, **dadurch gekennzeichnet,** daß in einer der Vakuumprozeßkammer (1) nachgeschalteten Rohrleitung (2) ein Regelventil (4) angeordnet ist.

28. Vorrichtung nach Anspruch 21, **dadurch gekennzeichnet,** daß der Kondensatabscheider (3) als Öldampf-Kondensator ausgebildet ist.

29. Vorrichtung nach Anspruch 21, **dadurch gekennzeichnet,** daß der Kondensatabscheider (3) als Metalldampf-Kondensator ausgebildet ist.

30. Vorrichtung nach Anspruch 21, **dadurch gekennzeichnet,** daß der Vakuum-Prozeßkammer (1) eine Mahlvorrichtung nachgeschaltet ist.

31. Vorrichtung nach Anspruch 21, **dadurch gekennzeichnet,** daß zwischen der Vakuumpumpe (6) und einer der Vakuumpumpe nachgeschalteten Ableitung (8) eine durch Ventile (10, 11) regelbare Ringleitung (9) angeordnet ist, in der sich der Gasneutralisator (12) und/oder der Gastrockner (13) befindet bzw. befinden.

32. Vorrichtung nach Anspruch 23, **dadurch gekennzeichnet,** daß dem Gassammelbehälter (15) eine Abfüllvorrichtung für das Befüllen von Transportflaschen nachgeschaltet ist.

33. Vorrichtung nach Anspruch 21, **dadurch gekennzeichnet,** daß der Vakuumpumpe (6) ein Gasneutralisator (12) nachgeschaltet ist.

34. Vorrichtung nach Anspruch 21, **dadurch gekennzeichnet,** daß der Vakuumpumpe (6) ein Brenner für die Verbrennung der Abgase nachgeschaltet ist.

35. Vorrichtung nach Anspruch 21, **dadurch gekennzeichnet,** daß der Vakuumpumpe (6) eine katalytische Vorrichtung, vorzugsweise mit einem Niederdruck-Katalysator, nachgeschaltet ist.
